(19) Europäisches Patentamt
European Patent Office
Office européen des brevets

(11) **EP 4 633 255 A1**

(12) **EUROPEAN PATENT APPLICATION**
published in accordance with Art. 153(4) EPC

(43) Date of publication:
**15.10.2025 Bulletin 2025/42**

(21) Application number: **23910388.0**

(22) Date of filing: **22.12.2023**

(51) International Patent Classification (IPC):
**H04W 56/00** (2009.01)

(52) Cooperative Patent Classification (CPC):
**H04W 24/08; H04W 56/00**

(86) International application number:
**PCT/CN2023/140967**

(87) International publication number:
**WO 2024/140462 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 CN 202211711469**

(71) Applicant: **Huawei Technologies Co., Ltd.
Shenzhen, Guangdong 518129 (CN)**

(72) Inventor: **HAO, Jinping
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND COMMUNICATION APPARATUS**

(57)     Embodiments of this application disclose a communication method and a communication apparatus. The method is performed by a terminal or a module used in the terminal. The method includes: obtaining first time at which a downlink signal arrives at a baseband through a radio frequency channel of the terminal; determining, based on the first time and second time, a downlink delay of transmitting the downlink signal from an access network device to the terminal, where the second time is time at which a baseband of the access network device sends the downlink signal; determining an error of the downlink delay based on the downlink delay and air interface transmission duration, where the air interface transmission duration is duration of transmitting, to an antenna of the terminal through an air interface, a signal sent by an antenna of the access network device; and sending downlink delay error information to the access network device, where the downlink delay error information indicates the error of the downlink delay. The error of the downlink delay is determined based on the downlink delay and the air interface transmission duration. In this way, the error of the downlink delay can be determined more accurately.

FIG. 6

## Description

This application claims priority to Chinese Patent Application No. 202211711469.7, filed with the China National Intellectual Property Administration on December 29, 2022 and entitled "COMMUNICATION METHOD AND COMMUNICATION APPARATUS", which is incorporated herein by reference in its entirety.

## TECHNICAL FIELD

This application relates to the communication field, and in particular, to a communication method and a communication apparatus.

## BACKGROUND

A time service means that a base station sends clock information (absolute time) to a terminal, so that a clock of the terminal is consistent with that of the base station. For example, a gNB (gNodeB) sends clock information of the gNB (gNodeB) to the terminal through an air interface, so that clock information of both communication parties is consistent. In a time service scenario, a base station that sends clock information to a terminal is a time service base station, and the terminal that receives the clock information is a time-serviced terminal.

In the time service scenario, to ensure that a clock of the time service base station is consistent with a clock of the time-serviced terminal within a specific range, a delay of propagating a signal from the base station to the terminal needs to be estimated. In this way, during a time service, a delay factor is considered for compensating and adjusting the clock information sent to the terminal, to ensure that the terminal receives accurate clock information. Therefore, to implement an accurate time service, the delay of propagating the signal from the base station to the terminal needs to be accurately estimated.

## SUMMARY

Embodiments of this application disclose a communication method and a communication apparatus, to more accurately estimate a delay of propagating a signal from a base station to a terminal.

According to a first aspect, an embodiment of this application provides a communication method, performed by a terminal or a module used in the terminal. The method includes: obtaining first time at which a downlink signal arrives at a baseband through a radio frequency channel of the terminal; determining, based on the first time and second time, a downlink delay of transmitting the downlink signal from an access network device to the terminal, where the second time is time at which a baseband (baseband) of the access network device sends the downlink signal; determining an error of the downlink delay based on the downlink delay and air interface transmission duration, where the air interface transmission duration is duration of transmitting, to an antenna of the terminal through an air interface, a signal sent by an antenna of the access network device; and sending downlink delay error information to the access network device, where the downlink delay error information indicates the error of the downlink delay.

In this embodiment of this application, the downlink delay of transmitting the downlink signal from the access network device to the terminal is determined based on the first time and the second time. Compared with half of round-trip time between the access network device and the terminal, the downlink delay can more accurately reflect a delay of propagating the signal from the access network device to the terminal. The error of the downlink delay is determined based on the downlink delay and the air interface transmission duration. In this way, the error of the downlink delay can be determined more accurately.

In a possible implementation, determining, based on the first time and the second time, the downlink delay of transmitting the downlink signal from the access network device to the terminal includes: using a difference between the first time and the second time as the downlink delay of transmitting the downlink signal from the access network device to the terminal. The difference between the first time and the second time means the first time minus the second time.

In this implementation, the difference between the first time and the second time is used as the downlink delay. In this way, both duration of transmitting the downlink signal from the antenna of the access network device to the antenna of the terminal and a delay of the downlink signal passing through the radio frequency channel are considered. Therefore, the delay of propagating the signal from the access network device to the terminal can be reflected more accurately.

In a possible implementation, the method further includes: adjusting, based on the downlink delay, clock information received by the terminal from the access network device.

In this implementation, the terminal adjusts, based on the downlink delay, the clock information received by the terminal from the access network device. In this way, the clock information can be adjusted in time, and signaling overheads are reduced.

In a possible implementation, the method further includes: sending downlink delay information to the access network device, where the downlink delay information indicates the downlink delay.

In this implementation, the downlink delay information is sent to the access network device, so that the access network device adjusts, based on the downlink delay information, the clock information delivered by the access network device.

In a possible implementation, before determining the error of the downlink delay based on the downlink delay and air interface transmission duration, the method further includes: determining the air interface transmission duration based on location information of the access network device and location information of the terminal.

In this implementation, the air interface transmission duration can be accurately determined based on the location information of the access network device and the location information of the terminal.

In a possible implementation, the method further includes: receiving measurement information from the access network device, where the measurement information includes a request for measuring the error of the downlink delay. The request for measuring the error of the downlink delay is used for requesting the terminal to measure the error of the downlink delay.

In this implementation, the measurement information from the access network device is received, to measure, in time, a downlink delay of transmitting a signal from the access network device to the terminal.

In a possible implementation, the measurement information further includes information indicating the second time, for example, the second time. The method further includes: obtaining the second time based on the measurement information.

In this implementation, the measurement information further includes the information indicating the second time. In this way, that signaling overheads can be reduced.

In a possible implementation, the measurement information further includes at least one of the following: configuration information of the downlink signal and the location information of the access network device.

In a possible implementation, the method further includes: sending capability information to the access network device, where the capability information indicates that the terminal has at least one of the following capabilities: a downlink delay measurement capability, a downlink delay error measurement capability, and a clock information calibration capability.

In this implementation, the capability information is sent to the access network device, so that the access network device provides a time service for the terminal in a more proper manner based on the capability information.

According to a second aspect, an embodiment of this application provides another communication method, performed by an access network device or a module used in the access network device. The method includes: sending measurement information to a terminal, where the measurement information includes a request for measuring an error of a downlink delay and second time, the second time is time at which a baseband of the access network device sends a downlink signal, and the downlink signal is used for measuring the error of the downlink delay; sending, by the baseband of the access network device, the downlink signal at the second time; and receiving downlink delay error information from the terminal, where the downlink delay error information indicates the error of the downlink delay of sending a signal by the access network device to the terminal.

In this embodiment of this application, the measurement information is sent to the terminal, so that the terminal measures a downlink delay of transmitting a signal from the access network device to the terminal, and learns time at which the access network device sends the downlink signal via the baseband of the access network device.

In a possible implementation, the method further includes: receiving downlink delay information from the terminal, where the downlink delay information indicates downlink delay of transmitting the downlink signal from the access network device to the terminal, and the downlink delay is determined based on the second time and first time at which the downlink signal arrives at a baseband through a radio frequency channel of the terminal.

In this implementation, the downlink delay information from the terminal is received, and delivered clock information is adjusted based on the downlink delay information.

In a possible implementation, the method further includes: determining the downlink delay based on the error of the downlink delay and air interface transmission duration, where the air interface transmission duration is duration of transmitting, to an antenna of the terminal through an air interface, a signal sent by an antenna of the access network device.

In this implementation, the downlink delay of transmitting the signal from the access network device to the terminal may be determined more accurately.

In a possible implementation, the error information further includes at least one of the following: configuration information of the downlink signal and location information of the access network device.

In a possible implementation, the method further includes: receiving capability information from the terminal, where the capability information indicates that the terminal has at least one of the following capabilities: a downlink delay measurement capability, a downlink delay error measurement capability, and a clock information calibration capability.

In this implementation, the capability information from the terminal is received, to provide a time service for the terminal in a more proper manner based on the capability information.

According to a third aspect, an embodiment of this application provides another communication method, performed by an access network device or a module used in the access network device. The method includes: obtaining third time at which an uplink signal arrives at a baseband of the access network device through a radio frequency channel of the access network device; determining, based on the third time and fourth time, an uplink delay of transmitting the uplink signal from a terminal to the access network device, where the fourth time is time at which a baseband of the terminal sends the uplink signal; and determining, based on the uplink delay and air interface transmission duration, an error of the uplink delay of transmitting the uplink signal from the terminal to the access network device, where the air interface transmission duration is duration of transmitting, to an antenna of the terminal through an air interface, a signal sent by an antenna of the access network device.

In this embodiment of this application, the uplink delay of transmitting the uplink signal from the terminal to the access network device is determined based on the third time and the fourth time. Compared with half of round-trip time between the access network device and the terminal, the uplink delay can more accurately reflect a delay of propagating the signal from the terminal to the access network device. The error of the uplink delay of transmitting the uplink signal from the terminal to the access network device may be determined more accurately based on the uplink delay and the air interface transmission duration.

In a possible implementation, determining, based on the third time and the fourth time, the uplink delay of transmitting the uplink signal from the terminal to the access network device includes: using a difference between the third time and the fourth time as the uplink delay of transmitting the uplink signal from the terminal to the access network device. The difference between the third time and the fourth time means the third time minus the fourth time.

In this implementation, the difference between the third time and the fourth time is used as the uplink delay of transmitting the uplink signal from the terminal to the access network device. In this way, a delay of the uplink signal passing through the radio frequency channel is considered. Therefore, the delay of propagating the signal from the terminal to the access network device can be reflected more accurately.

In a possible implementation, the method further includes: sending first information to the terminal, where the first information indicates the terminal to send the uplink signal to the access network device at the fourth time.

In this implementation, the first information is sent to the terminal, to indicate the terminal to send the uplink signal to the access network device at the fourth time.

In a possible implementation, the method further includes: determining, based on the error of the uplink delay, the air interface transmission duration, and the round-trip time between the access network device and the terminal, a downlink delay and/or an error of the downlink delay of transmitting a signal from the access network device to the terminal.

In this implementation, the downlink delay and/or the error of the downlink delay of transmitting the signal from the access network device to the terminal may be accurately determined based on the uplink delay, the air interface transmission duration, and the round-trip time, and a workload of the terminal is reduced.

In a possible implementation, the method further includes: sending, to the terminal, information indicating the downlink delay and/or the error of the downlink delay.

In this implementation, the information indicating the downlink delay and/or the error of the downlink delay is sent to the terminal, so that the access network device adjusts, based on the information, clock information delivered by the access network device to the terminal.

In a possible implementation, the method further includes: sending the error of the uplink delay and second information to the terminal, where the second information is used by the terminal to determine the round-trip time between the access network device and the terminal.

In this implementation, the error of the uplink delay and the second information is sent to the terminal, so that the terminal adjusts the clock information of the terminal according to the error of the uplink delay and the second information.

In a possible implementation, the method further includes: receiving capability information from the terminal, where the capability information indicates that the terminal has at least one of the following capabilities: a downlink delay measurement capability, a downlink delay error measurement capability, and a clock information calibration capability.

In this implementation, the capability information from the terminal is received, to provide a time service for the terminal in a more proper manner based on the capability information.

According to a fourth aspect, an embodiment of this application provides another communication method, performed by a terminal or a module used in the terminal. The method includes: receiving first information sent by an access network device, where the first information indicates a baseband of the terminal to send an uplink signal to the access network device at fourth time; and sending the uplink signal to the access network device at the fourth time via the baseband of the terminal.

In this embodiment of this application, the uplink signal is sent to the access network device at the fourth time via the baseband of the terminal, so that the access network device more accurately estimates an uplink delay.

In a possible implementation, the method further includes: receiving, from the access network device, information indicating a downlink delay and/or an error of the downlink delay; and adjusting, based on the information indicating the downlink delay and/or the error of the downlink delay, clock information received by the terminal from the access network device.

In a possible implementation, the method further includes: receiving an error of an uplink delay and second information from the access network device, where the second information is used by the terminal to determine round-trip time between the access network device and the terminal; determining, based on the second information, that the terminal determines the round-trip time between the access network device and the terminal; and determining, based on the error of the uplink delay, air interface transmission duration, and the round-trip time, the downlink delay and/or the error of the downlink delay of transmitting a signal from the access network device to the terminal.

In this implementation, the downlink delay and/or the error of the downlink delay of transmitting the signal from the access network device to the terminal are/is determined based on the error of the uplink delay, the air interface transmission duration, and the round-trip time. The terminal may compensate and adjust the clock information.

In a possible implementation, the method further includes: sending capability information to the access network device, where the capability information indicates that the terminal has at least one of the following capabilities: a downlink delay measurement capability, a downlink delay error measurement capability, and a clock information calibration capability.

In this implementation, the capability information is sent to the access network device, so that the access network device provides a time service for the terminal in a more proper manner based on the capability information.

According to a fifth aspect, an embodiment of this application provides another communication method, performed by a terminal or a module used in the terminal. The method includes: determining air interface transmission duration based on location information of an access network device and location information of the terminal; and determining a delay error based on the air interface transmission duration and round-trip time (round-trip time, RTT) between the access network device and the terminal.

In this embodiment of this application, the delay error may be determined more accurately.

In a possible implementation, the method further includes: receiving first time information from the access network device; and determining the RTT between the access network device and the terminal based on the first time information.

According to a sixth aspect, an embodiment of this application provides another communication method, performed by an access network device or a module used in the access network device. The method includes: determining air interface transmission duration based on location information of the access network device and location information of a terminal; and determining a delay error based on the air interface transmission duration and RTT between the access network device and the terminal.

In this embodiment of this application, the delay error may be determined more accurately.

In a possible implementation, the method further includes: receiving second time information from the terminal; and determining the RTT between the access network device and the terminal based on the second time information.

According to a seventh aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a downlink signal. The processing module is configured to obtain first time at which the downlink signal arrives at a baseband through a radio frequency channel of a terminal; determine, based on the first time and second time, a downlink delay of transmitting the downlink signal from an access network device to the terminal, where the second time is time at which a baseband of the access network device sends the downlink signal; and determine an error of the downlink delay based on the downlink delay and air interface transmission duration, where the air interface transmission duration is duration of transmitting, to an antenna of the terminal through an air interface, a signal sent by an antenna of the access network device. The transceiver module is further configured to send downlink delay error information to the access network device, where the downlink delay error information indicates the error of the downlink delay.

In a possible implementation, the processing module is specifically configured to use a difference between the first time and the second time as the downlink delay of transmitting the downlink signal from the access network device to the terminal. The difference between the first time and the second time means the first time minus the second time.

In a possible implementation, the processing module is further configured to adjust, based on the downlink delay, clock information received by the terminal from the access network device.

In a possible implementation, the transceiver module is further configured to send downlink delay information to the access network device, where the downlink delay information indicates the downlink delay.

In a possible implementation, the processing module is further configured to determine the air interface transmission duration based on location information of the access network device and location information of the terminal.

In a possible implementation, the transceiver module is further configured to receive measurement information from the access network device, where the measurement information includes a request for measuring the error of the downlink delay.

In a possible implementation, the error information further includes information indicating the second time. The processing module is further configured to obtain the second time based on the measurement information.

In a possible implementation, the transceiver module is further configured to send capability information to the access network device, where the capability information indicates that the terminal has at least one of the following capabilities: a downlink delay measurement capability, a downlink delay error measurement capability, and a clock information calibration capability.

For possible implementations of the communication apparatus in the seventh aspect, refer to the possible implementations of the first aspect.

For technical effects brought by the possible implementations of the seventh aspect, refer to descriptions of the technical effects of the first aspect or the possible implementations of the first aspect.

According to an eighth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to send measurement information to a terminal, where the measurement information includes a request for measuring an error of a downlink delay and second time, the second time is time at which a baseband of an access network device sends a downlink signal, and the downlink signal is used for measuring the error of the downlink delay. The processing module is configured to generate the downlink signal. The transceiver module is further configured to send the downlink signal sent by the baseband of the access network device at the second time; and receive downlink delay error information from the terminal, where the downlink delay error information indicates the error of the downlink delay of sending a signal by the access network device to the terminal.

In a possible implementation, the transceiver unit is further configured to receive downlink delay information from the terminal, where the downlink delay information indicates a downlink delay of transmitting the downlink signal from the access network device to the terminal, and the downlink delay is determined based on the second time and first time at which the downlink signal arrives at a baseband through a radio frequency channel of the terminal.

In a possible implementation, the processing module is further configured to determine the downlink delay based on the error of the downlink delay and air interface transmission duration, where the air interface transmission duration is duration of transmitting, to an antenna of the terminal through an air interface, a signal sent by an antenna of the access network device.

In a possible implementation, the transceiver unit is further configured to receive capability information from the terminal, where the capability information indicates that the terminal has at least one of the following capabilities: a downlink delay measurement capability, a downlink delay error measurement capability, and a clock information calibration capability.

For possible implementations of the communication apparatus in the eighth aspect, refer to the possible implementations of the second aspect.

For technical effects brought by the possible implementations of the eighth aspect, refer to descriptions of the technical effects of the second aspect or the possible implementations of the second aspect.

According to a ninth aspect, an embodiment of this application provides a communication apparatus. The communication apparatus has a function of implementing behavior in the method embodiment in the third aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive an uplink signal. The processing module is configured to obtain third time at which the uplink signal arrives at a baseband of an access network device through a radio frequency channel of the access network device; determine, based on the third time and fourth time, an uplink delay of transmitting the uplink signal from a terminal to the access network device, where the fourth time is time at which a baseband of the terminal sends the uplink signal; and determine, based on the uplink delay and air interface transmission duration, an error of the uplink delay of transmitting the uplink signal from the terminal to the access network device, where the air interface transmission duration is duration of transmitting, to an antenna of the terminal through an air interface, a signal sent by an antenna of the access network device.

In a possible implementation, the processing module is specifically configured to use a difference between the third time and the fourth time as the uplink delay of transmitting the uplink signal from the terminal to the access network device.

In a possible implementation, the transceiver module is further configured to send first information to the terminal, where the first information indicates the terminal to send the uplink signal to the access network device at the fourth time.

In a possible implementation, the processing module is further configured to determine, based on the error of the uplink delay, the air interface transmission duration, and round-trip time between the access network device and the terminal, a downlink delay and/or an error of the downlink delay of transmitting a signal from the access network device to the terminal.

In a possible implementation, the transceiver module is further configured to send, to the terminal, information indicating the downlink delay and/or the error of the downlink delay.

In a possible implementation, the transceiver module is further configured to send the error of the uplink delay and second information to the terminal, where the second information is used by the terminal to determine the round-trip time between the access network device and the terminal.

In a possible implementation, the transceiver module is further configured to receive capability information from the terminal, where the capability information indicates that the terminal has at least one of the following capabilities: a downlink delay measurement capability, a downlink delay error measurement capability, and a clock information calibration capability.

For possible implementations of the communication apparatus in the ninth aspect, refer to the possible implementations of the third aspect.

For technical effects brought by the possible implementations of the ninth aspect, refer to descriptions of the technical effects of the third aspect or the possible implementations of the third aspect.

According to a tenth aspect, an embodiment of this application provides a communication apparatus. The communication apparatus has a function of implementing behavior in the method embodiment in the fourth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive first information sent by an access network device, where the first information indicates a baseband of a terminal to send an uplink signal to the access network device at fourth time. The processing module is configured to generate the uplink signal. The transceiver module is further configured to send, at the fourth time, the uplink signal sent by the baseband of the terminal to the access network device.

In a possible implementation, the transceiver module is further configured to receive, from the access network device, information indicating a downlink delay and/or an error of the downlink delay. The processing module is further configured to adjust, based on the information indicating the downlink delay and/or the error of the downlink delay, clock information received by the terminal from the access network device.

In a possible implementation, the transceiver module is further configured to receive an error of an uplink delay and second information from the access network device, where the second information is used by the terminal to determine round-trip time between the access network device and the terminal. The processing module is further configured to determine, based on the second information, that the terminal determines the round-trip time between the access network device and the terminal; and determine, based on the error of the uplink delay, air interface transmission duration, and the round-trip time, the downlink delay and/or the error of the downlink delay of transmitting a signal from the access network device to the terminal.

In a possible implementation, the transceiver module is further configured to send capability information to the access network device, where the capability information indicates that the terminal has at least one of the following capabilities: a downlink delay measurement capability, a downlink delay error measurement capability, and a clock information calibration capability.

For possible implementations of the communication apparatus in the tenth aspect, refer to the possible implementations of the fourth aspect.

For technical effects brought by the possible implementations of the tenth aspect, refer to descriptions of the technical effects of the fourth aspect or the possible implementations of the fourth aspect.

According to an eleventh aspect, an embodiment of this application provides another communication apparatus. The communication apparatus has a function of implementing behavior in the method embodiment in the fifth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to determine air interface transmission duration based on location information of an access network device and location information of a terminal; and determine a delay error based on the air interface transmission duration and RTT between the access network device and the terminal.

In a possible implementation, the transceiver module is configured to receive first time information from the access network device. The processing module is further configured to determine the RTT between the access network device and the terminal based on the first time information.

According to a twelfth aspect, an embodiment of this application provides another communication apparatus. The communication apparatus has a function of implementing behavior in the method embodiment in the fifth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to determine air interface transmission duration based on location information of an access network device and location information of a terminal; and determine a delay error based on the air interface transmission duration and RTT between the access network device and the terminal.

In a possible implementation, the transceiver module is configured to receive second time information from the terminal. The processing module is further configured to determine the RTT between the access network device and the terminal based on the second time information.

According to a thirteenth aspect, an embodiment of this application provides another communication apparatus. The communication apparatus includes a processor, the processor is coupled to a memory, the memory is configured to store a program or instructions, and when the program or the instructions are executed by the processor, the communication apparatus is enabled to perform the method according to any one of the first aspect to the sixth aspect.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information.

After the information is output by the processor, other processing may need to be performed on the information before the information reaches the transceiver. Similarly, when the processor receives input information, the transceiver receives the information, and inputs the information into the processor. Further, after the transceiver receives the information, other processing may need to be performed on the information before the information is input to the processor.

An operation like sending and/or receiving related to the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in the first aspect or any possible implementation of the first aspect.

In a possible implementation, the memory is located outside the communication apparatus. In a possible implementation, the memory is located inside the communication apparatus.

In a possible implementation, the processor and the memory may alternatively be integrated into one component, that is, the processor and the memory may alternatively be integrated together.

In a possible implementation, the communication apparatus further includes the transceiver. The transceiver is configured to receive or send a signal, and the like.

According to a fourteenth aspect, an embodiment of this application provides another communication apparatus. The communication apparatus includes a processing circuit and an interface circuit, the interface circuit is configured to obtain data or output data, and the processing circuit is configured to perform the method according to any one of the first aspect to the sixth aspect.

According to a fifteenth aspect, an embodiment of this application provides a computer-readable storage medium. The computer-readable storage medium stores a computer program, the computer program includes program instructions, and when the program instructions are executed, a computer is enabled to perform the method according to any one of the first aspect to the sixth aspect.

According to a sixteenth aspect, an embodiment of this application provides a computer program product. The computer program product includes a computer program, the computer program includes program instructions, and when the program instructions are executed, a computer is enabled to perform the method according to any one of the first aspect to the sixth aspect.

According to a seventeenth aspect, an embodiment of this application provides a communication system, including the communication apparatus according to any one of the first aspect or the possible implementations of the first aspect, and the communication apparatus according to any one of the second aspect or the possible implementations of the second aspect.

According to an eighteenth aspect, an embodiment of this application provides a communication system, including the communication apparatus according to any one of the third aspect or the possible implementations of the third aspect, and the communication apparatus according to any one of the fourth aspect or the possible implementations of the fourth aspect.

According to a nineteenth aspect, an embodiment of this application provides a communication system, including the communication apparatus according to any one of the fifth aspect or the possible implementations of the fifth aspect, and the communication apparatus according to any one of the sixth aspect or the possible implementations of the sixth aspect.

According to a twentieth aspect, an embodiment of this application provides a chip, including a processor and a communication interface. The processor reads, by using the communication interface, instructions stored in a memory, to perform the method according to any one of the first aspect to the sixth aspect.

**BRIEF DESCRIPTION OF DRAWINGS**

To describe the technical solutions in embodiments of this application or in the background more clearly, the following briefly describes the accompanying drawings for describing embodiments of this application or the background.

FIG. 1 is a diagram of an architecture of a communication system 1000 to which an embodiment of this application is applied;
FIG. 2 is a diagram of a time service scenario to which an embodiment of this application is applied;
FIG. 3 is a flowchart of existing measurement of RTT between a base station and a terminal;
FIG. 4 is a diagram of a process of signal transmission between a base station and a terminal according to an embodiment of this application;
FIG. 5 is a flowchart of interaction of a communication method according to an embodiment of this application;
FIG. 6 is a flowchart of interaction of another communication method according to an embodiment of this application;
FIG. 7 is a flowchart of interaction of another communication method according to an embodiment of this application;
FIG. 8 is a flowchart of interaction of another communication method according to an embodiment of this application;
FIG. 9 is a flowchart of interaction of another communication method according to an embodiment of this application;
FIG. 10 is a flowchart of interaction of another communication method according to an embodiment of this application;
FIG. 11 is a flowchart of interaction of another communication method according to an embodiment of this application;
FIG. 12 is a diagram of a structure of a communication apparatus 1200 according to an embodiment of this application;
FIG. 13 is a diagram of a structure of another communication apparatus 130 according to an embodiment of this application; and
FIG. 14 is a diagram of a structure of another communication apparatus 140 according to an embodiment of this application.

**DESCRIPTION OF EMBODIMENTS**

The terms "first", "second", and the like in the specification, claims, and accompanying drawings of this application are merely used to distinguish between different objects, and are not used to describe a specific order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, the terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

The terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, a character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

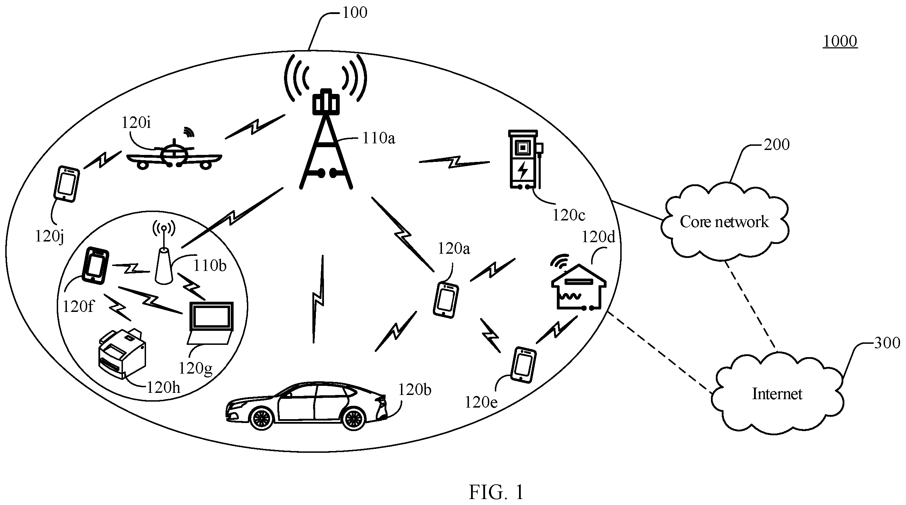

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and a radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 1 is merely a diagram. The communication system may further include another access network device, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following uses an example in which the base station is used as the radio access network device for description.

The terminal is a device having a wireless transceiver function, and may send a signal to the base station, or receive a signal from the base station. The terminal may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertzes (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

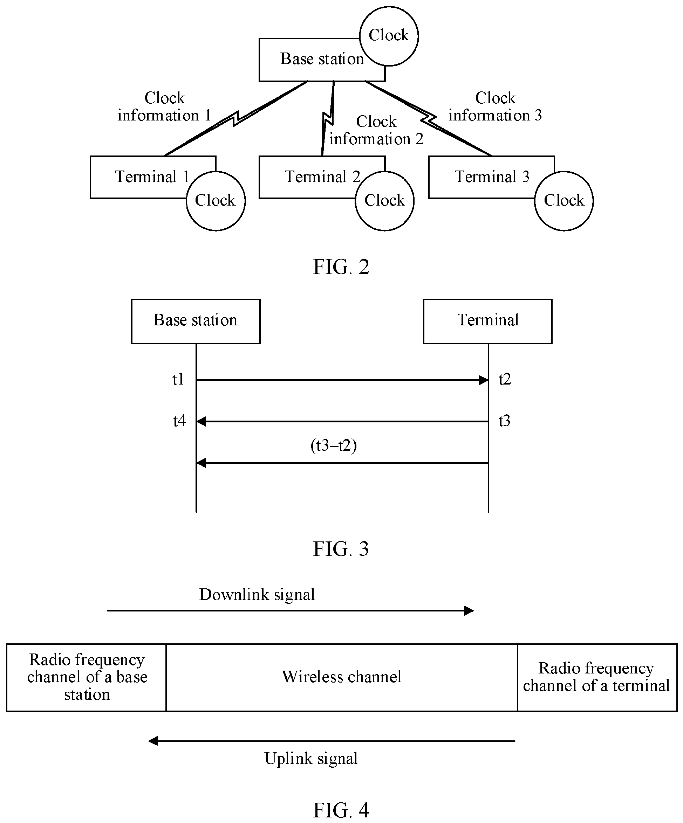

FIG. 2 is a diagram of a time service scenario to which an embodiment of this application is applied. As shown in FIG. 2, a base station (for example, a gNodeB) sends clock information of the base station to a terminal through an air interface, so that clock information of both communication parties is consistent.

In the time service scenario, to ensure that a clock of a time service base station is consistent with a clock of a time-serviced terminal within a specific range, a delay of propagating a signal from the base station to the terminal needs to be estimated. In this way, during a time service, a delay factor is considered for compensating for and adjusting time sent to UE, to ensure that the UE receives accurate time. Because delays of propagating a signal from the base station to different terminals are different, to ensure that the clock information of the base station is consistent with that of each terminal, the base station sends the clock information to each terminal based on the delays of propagating the signal from the base station to the different terminals. Refer to FIG. 2. The base station sends clock information 1 to a terminal 1, the base station sends clock information 2 to a terminal 2, and the base station sends clock information 3 to a terminal 3.

For ease of understanding of solutions of this application, the following first describes terms and technical solutions in embodiments of this application.

Round-trip time (round-trip time, RTT)

To improve accuracy of estimating signal propagation time, the base station and the terminal may estimate the propagation time by measuring the RTT. FIG. 3 is a flowchart of existing measurement of RTT between a base station and a terminal. As shown in FIG. 3, a measurement procedure of the RTT between the base station and the terminal is as follows: The base station sends a downlink signal to the terminal, and records time of sending the downlink signal as t1; the terminal measures arrival time of the downlink signal as t2; the terminal sends an uplink signal to the base station, and records time of sending the uplink signal as t3; the base station measures arrival time of the uplink signal as t4; the terminal reports time information of (t3-t2) to the base station; and the base station may calculate, based on the time information, the round-trip time of propagating the signal from the base station to the terminal, to obtain time of propagation from the base station to the terminal (where it is assumed that a delay of propagating the signal from the base station to the terminal is T). A formula for calculating the RTT between the base station and the terminal by the base station is as follows:

$$2T = (t4-t1)-(t3-t2) \quad (1)$$

2T represents the RTT between the base station and the terminal.

Signal transmission between a base station and a terminal

FIG. 4 is a diagram of a process of signal transmission between a base station and a terminal according to an embodiment of this application. As shown in FIG. 4, a downlink signal generated by the base station (for example, a baseband of the base station) is transmitted to the terminal successively through a radio frequency channel of the base station, a wireless channel, and a radio frequency channel of the terminal; and an uplink signal generated by the terminal (for example, a baseband of the terminal) is transmitted to the base station successively through the radio frequency channel of the terminal, the wireless channel, and the radio frequency channel of the base station. The wireless channel is a channel between an antenna of the base station and an antenna of the terminal. Signal transmission between the base station and the terminal may alternatively be performed through another channel. This is not limited in this application. A process in which a signal passes through a radio frequency channel may be understood as a process of processing the signal by using a radio frequency circuit.

An existing a time service solution is as follows: A terminal sends an uplink signal, for example, a preamble (preamble) signal or an uplink sounding reference signal (sounding reference signal) SRS signal; and a base station measures time at which the uplink signal sent by the terminal arrives at the base station, to estimate time of propagating the signal from the terminal to the base station. When sending time information to the terminal for a time service, the base station compensates for the time of propagation, so that the terminal can obtain accurate time. In this solution, during calculation of time of propagation from the base station to the terminal, the base station and the terminal calculate time from time at which an antenna of the base station sends a signal to time at which an antenna of the terminal receives the signal. However, in an actual product, during sending and receiving of the signal, there is also a delay of the signal passing through the radio frequency channel. This part of delay cannot be accurately estimated in the foregoing method. Therefore, during a time service, the base station cannot accurately estimate a delay of propagating the signal to the terminal, and cannot make accurate compensation. Consequently, accurate clock information cannot be sent to the terminal, and a time service is inaccurate.

Embodiments of this application provide communication solutions in which a delay of propagating a signal from an access network device to a terminal can be estimated more accurately. The following describes, with reference to accompanying drawings, the communication solution provided in embodiments of this application.

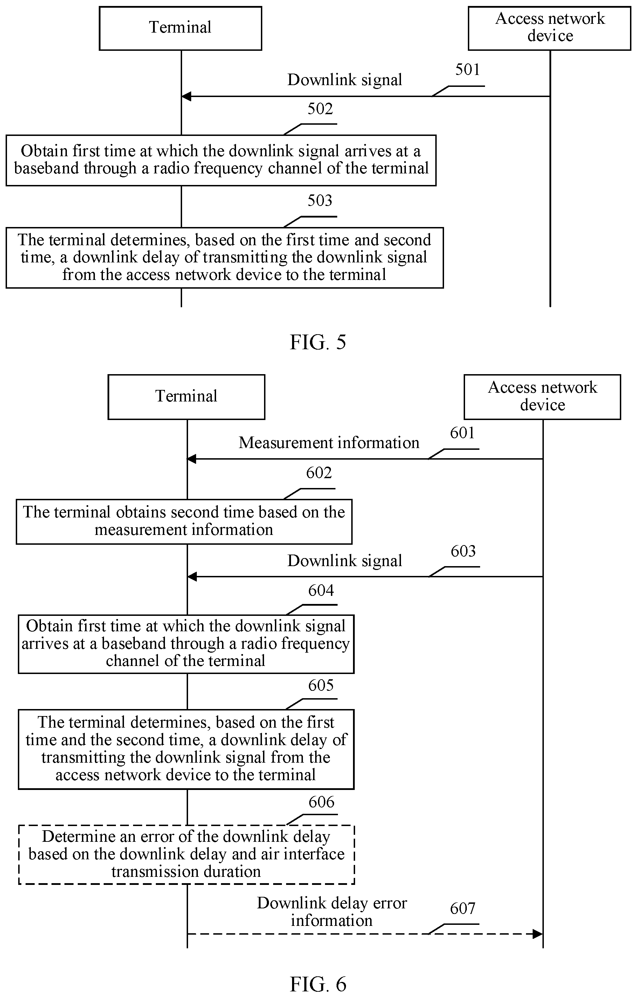

FIG. 5 is a flowchart of interaction of a communication method according to an embodiment of this application. As shown in FIG. 5, the method includes the following steps.

501: An access network device sends a downlink signal to a terminal.

Correspondingly, the terminal receives the downlink signal from the access network device. For example, the terminal receives the downlink signal from the access network device via an antenna of the terminal, transmits the downlink signal to a baseband (for example, a baseband chip) through a radio frequency channel of the terminal, and records time at which the downlink signal arrives at the baseband (which may be referred to as a baseband unit), that is, the following first time.

502: The terminal obtains the first time at which the downlink signal arrives at the baseband through the radio frequency channel of the terminal.

The first time is a moment after a moment at which the antenna of the terminal receives the downlink signal, for example, a moment at which the baseband of the terminal receives the downlink signal.

In a possible implementation, before receiving the downlink signal from the access network device, the terminal receives measurement information from the access network device. The measurement information includes a request for measuring an error of a downlink delay, to be specific, information used for requesting the terminal to measure the error of the downlink delay. The measurement information may be carried in a radio resource control (radio resource control, RRC) message, or may be carried in another message. The terminal obtains, in response to the measurement information, the first time at which the received downlink signal arrives at the baseband through the radio frequency channel of the terminal, and performs step 503. The error of the downlink delay of transmitting the signal from the access network device to the terminal can be measured in time by receiving measurement information from the access network device.

In a possible implementation, the terminal performs the following operation: The terminal sends capability information to the access network device. The capability information indicates that the terminal has at least one of the following capabilities: a downlink delay measurement capability (which may be referred to as a time service error measurement capability), a downlink delay error measurement capability, and a clock information calibration capability. For example, the capability information indicates that the terminal has the downlink delay error measurement capability. In this case, the access network device may send the measurement information to the terminal, where the measurement information is further used for requesting the terminal to report the error of the downlink delay to the access network device. For another example, the capability information indicates that the terminal has the clock information calibration capability. In this case, the access network device may send the measurement information to the terminal, where the measurement information is further used for requesting the terminal to calibrate clock information of the terminal. In this implementation, the capability information is sent to the access network device, so that the access network device provides a time service for the terminal in a more proper manner based on the capability information.

503: The terminal determines, based on the first time and second time, the downlink delay of transmitting the downlink signal from the access network device to the terminal.

The second time is time at which a baseband of the access network device sends the downlink signal, that is, time at which the downlink signal leaves the baseband and enters a radio frequency channel. The second time is a moment before a moment at which an antenna of the access network device sends the downlink signal. A possible implementation of step 503 is as follows: A difference between the first time and the second time is used as the downlink delay of transmitting the downlink signal from the access network device to the terminal. In this implementation, the difference between the first time and the second time is used as the downlink delay. In this way, both duration of transmitting the downlink signal from the antenna of the access network device to the antenna of the terminal and a delay of the downlink signal passing through the radio frequency channel are considered. Therefore, the delay of propagating the signal from the access network device to the terminal can be reflected more accurately.

In a possible implementation, the measurement information further includes information indicating the second time. The terminal obtains the second time based on the measurement information. The measurement information may further include at least one of the following: configuration information of the downlink signal and location information of the access network device. In this implementation, the measurement information further includes the information indicating the second time. In this way, signaling overheads can be reduced.

In a possible implementation, the access network device sends, to the terminal by using an RRC message or a broadcast message, assistance information used for downlink delay estimation. The assistance information may include at least one of the following: the configuration information of the downlink signal, absolute time information of sending the downlink signal (that is, the second time), and the location information of the access network device. The configuration information of the downlink signal may include a time configuration (a sending slot and a symbol), a frequency configuration, a bandwidth configuration, and the like. It should be noted that the assistance information and the measurement information may be in a same message.

In a possible implementation, after determining the downlink delay, the terminal performs the following operation: adjusting, based on the downlink delay, clock information received by the terminal from the access network device. For example, the clock information before adjustment by the terminal is time 1. The terminal adjusts the clock information to time 2, where the time 2 is obtained by delaying the time 1 by the downlink delay. In this implementation, the terminal adjusts, based on the downlink delay, the clock information received by the terminal from the access network device. In this way, the clock information can be adjusted in time, and signaling overheads are reduced.

In a possible implementation, after determining the downlink delay, the terminal performs the following operation: sending downlink delay information to the access network device, where the downlink delay information indicates the downlink delay. The access network device may adjust, based on the downlink delay information, clock information delivered to the terminal. For example, the current clock information of the access network device is time 3. The access network device sends, to the terminal device based on the downlink delay, clock information indicating time 4, where the time 4 is obtained by delaying the time 3 by the downlink delay. In this implementation, the downlink delay information is sent to the access network device, so that the access network device adjusts, based on the downlink delay information, the clock information delivered by the access network device.

In a possible implementation, after determining the downlink delay, the terminal performs the following operations: determining the error of the downlink delay based on the downlink delay and air interface transmission duration, where the air interface transmission duration is duration of transmitting, to the antenna of the terminal through an air interface, a signal sent by the antenna of the access network device; and sending downlink delay error information to the access network device, where the downlink delay error information indicates the error of the downlink delay. The air interface transmission duration is propagation time of the downlink signal through the air interface. In other words, the air interface transmission duration is transmission duration of the downlink signal on a wireless channel between the antenna of the access network device and the antenna of the terminal. The downlink delay may be considered as duration in which the downlink signal is transmitted from the access network device to the terminal through a downlink channel (for example, including the radio frequency channel) and the air interface. A moment at which the downlink signal is transmitted to the terminal may be a moment at which the downlink signal arrives at the baseband of the terminal. A formula for determining the error of the downlink delay by the terminal based on the downlink delay and the air interface transmission duration is as follows:

$$t\_error\_DL = t\_trans - t\_real \ (2)$$

t_error_DL represents the error of the downlink delay, t_trans represents the downlink delay, and t_real represents the air interface transmission duration. t_error_DL may be considered as a delay error of the radio frequency channel. The access network device may adjust, based on the downlink delay error information, the clock information delivered to the terminal. For example, the current clock information of the access network device is time 5. The access network device sends, to the terminal device based on the error of the downlink delay, clock information indicating time 6, where the time 6 is obtained by delaying the time 5 (by the downlink delay and the air interface transmission duration). A manner in which the terminal learns of the air interface transmission duration is not limited. For example, the access network device sends, to the terminal, information indicating the air interface transmission duration. For another example, the terminal determines the air interface transmission duration based on the location information of the access network device and location information of the terminal. In this implementation, the error of the downlink delay is determined based on the downlink delay and the air interface transmission duration. In this way, the error of the downlink delay can be determined more accurately.

In this embodiment of this application, the downlink delay of transmitting the downlink signal from the access network device to the terminal is determined based on the first time and the second time. Compared with half of round-trip time between the access network device and the terminal, the downlink delay can more accurately reflect the delay of propagating the signal from the access network device to the terminal.

FIG. 6 is a flowchart of interaction of another communication method according to an embodiment of this application. A method procedure in FIG. 6 is a possible implementation of the method described in FIG. 5. As shown in FIG. 6, the method includes the following steps.

601: An access network device sends measurement information to a terminal.

Correspondingly, the terminal receives the measurement information from the access network device. The measurement information includes a request for measuring an error of a downlink delay.

In a possible implementation, the measurement information further includes information indicating second time. The terminal may obtain the second time based on the measurement information. The measurement information further includes at least one of the following: configuration information of a downlink signal and location information of the access network device. In this implementation, the measurement information further includes the information indicating the second time. In this way, signaling overheads can be reduced.

In a possible implementation, the access network device sends, to the terminal by using an RRC message or a broadcast message, assistance information used for downlink delay estimation. The assistance information may include at least one of the following: the configuration information of the downlink signal, absolute time information of sending the downlink signal (that is, the second time), and the location information of the access network device. The access network device sends the measurement information to the terminal to request the terminal to measure the downlink delay, and sends the assistance information to the terminal to cause the terminal to learn of the second time.

602: The terminal obtains the second time based on the measurement information.

The second time is time at which a baseband of the access network device sends the downlink signal. The terminal may further learn, based on the measurement information, that the downlink signal sent by the access network device is to be used for measuring the error of the downlink delay, to be specific, measuring a delay error of the downlink signal.

603: The access network device sends the downlink signal to the terminal.

Correspondingly, the terminal receives the downlink signal from the access network device. For example, the baseband of the access network device sends the downlink signal to the terminal at the second time.

604: The terminal obtains first time at which the downlink signal arrives at a baseband through a radio frequency channel of the terminal.

For step 604, refer to step 502.

605: The terminal determines, based on the first time and the second time, the downlink delay of transmitting the downlink signal from the access network device to the terminal.

For step 605, refer to step 503.

606: The terminal determines the error of the downlink delay based on the downlink delay and air interface transmission duration.

The air interface transmission duration is duration of transmitting, to an antenna of the terminal through an air interface, a signal sent by an antenna of the access network device.

607: The terminal sends downlink delay error information to the access network device.

The downlink delay error information indicates the error of the downlink delay.

Step 606 and step 607 may be replaced with the following: The terminal sends downlink delay information to the access network device, where the downlink delay information indicates the downlink delay. The access network device adjusts, based on the downlink delay information, clock information delivered by the access network device to the terminal. After receiving the downlink delay information reported by the terminal, the access network device may consider compensating for the delay error during a time service, to ensure that clock information sent to the terminal may be the most accurate time when the terminal receives the clock information, so as to ensure accuracy of the time service. Step 606 and step 607 may alternatively be replaced with the following: The terminal adjusts, based on the downlink delay, clock information received by the terminal from the access network device.

In this embodiment of this application, the measurement information further includes the information indicating the second time. In this way, signaling overheads can be reduced. In this embodiment of this application, both duration of transmitting the downlink signal from the antenna of the access network device to the antenna of the terminal and a delay of the downlink signal passing through the radio frequency channel are considered. Therefore, the delay of propagating the signal from the access network device to the terminal can be reflected more accurately. The error of the downlink delay is determined based on the downlink delay and the air interface transmission duration. In this way, the error of the downlink delay can be determined more accurately.

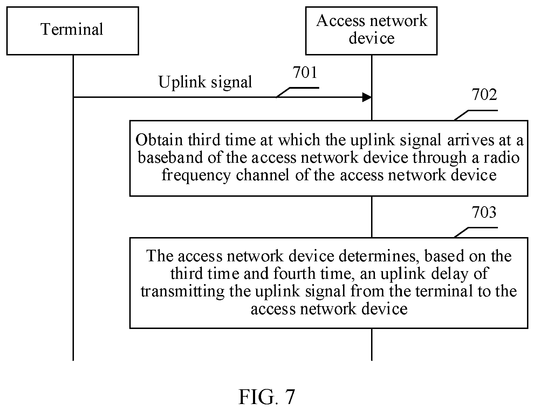

FIG. 7 is a flowchart of interaction of another communication method according to an embodiment of this application. As shown in FIG. 7, the method includes the following steps.

701: A terminal sends an uplink signal to an access network device.

Correspondingly, the access network device receives the uplink signal from the terminal.

In a possible implementation, before the terminal sends the uplink signal to the access network device, the access network device sends first information to the terminal, where the first information indicates the terminal to send the uplink signal to the access network device at fourth time. The terminal may send the uplink signal to the access network device at the fourth time based on the first information. In this implementation, the first information is sent to the terminal, to indicate the terminal to send the uplink signal to the access network device at the fourth time.

702: The access network device obtains third time at which the uplink signal arrives at a baseband of the access network device through a radio frequency channel of the access network device.

The third time is a moment after a moment at which an antenna of the access network device receives the uplink signal.

703: The access network device determines, based on the third time and the fourth time, an uplink delay of transmitting the uplink signal from the terminal to the access network device.

The fourth time is time at which a baseband of the terminal sends the uplink signal. The fourth time is a moment before a moment at which an antenna of the terminal sends the uplink signal. For example, the fourth time is a moment at which the terminal is to transmit the uplink signal through a radio frequency channel. A possible implementation of step 703 is as follows: A difference between the third time and the fourth time is used as the uplink delay of transmitting the uplink signal from the terminal to the access network device. In this implementation, the difference between the third time and the fourth time is used as the uplink delay of transmitting the uplink signal from the terminal to the access network device. In this way, a delay of the uplink signal passing through the radio frequency channel is considered. Therefore, the delay of propagating the signal from the terminal to the access network device can be reflected more accurately.

In a possible implementation, the terminal performs the following operation: The terminal sends capability information to the access network device. The capability information indicates that the terminal has at least one of the following capabilities: a downlink delay measurement capability (which may be referred to as a time service error measurement capability), a downlink delay error measurement capability, and a clock information calibration capability. For example, the capability information indicates that the terminal has the downlink delay measurement capability. In this case, the access network device may send, to the terminal, an error of the uplink delay of transmitting the uplink signal from the terminal to the access network device and second information (which is used by the terminal to determine round-trip time between the access network device and the terminal), so that the terminal measures a downlink delay. For another example, the capability information indicates that the terminal has the downlink delay error measurement capability. In this case, the access network device may send, to the terminal, an error of the uplink delay of transmitting the uplink signal from the terminal to the access network device and second information (which is used by the terminal to determine round-trip time between the access network device and the terminal), so that the terminal measures an error of a downlink delay. For another example, the capability information indicates that the terminal has the clock information calibration capability. In this case, the access network device may send, to the terminal, information indicating a downlink delay and/or an error of the downlink delay, and the terminal calibrates clock information of the terminal based on the downlink delay and/or the error of the downlink delay. In this implementation, the capability information is sent to the access network device, so that the access network device provides a time service for the terminal in a more proper manner based on the capability information.

In this embodiment of this application, the uplink delay of transmitting the uplink signal from the terminal to the access network device is determined based on the third time and the fourth time. Compared with half of the round-trip time between the access network device and the terminal, the uplink delay can more accurately reflect the delay of propagating the signal from the terminal to the access network device.

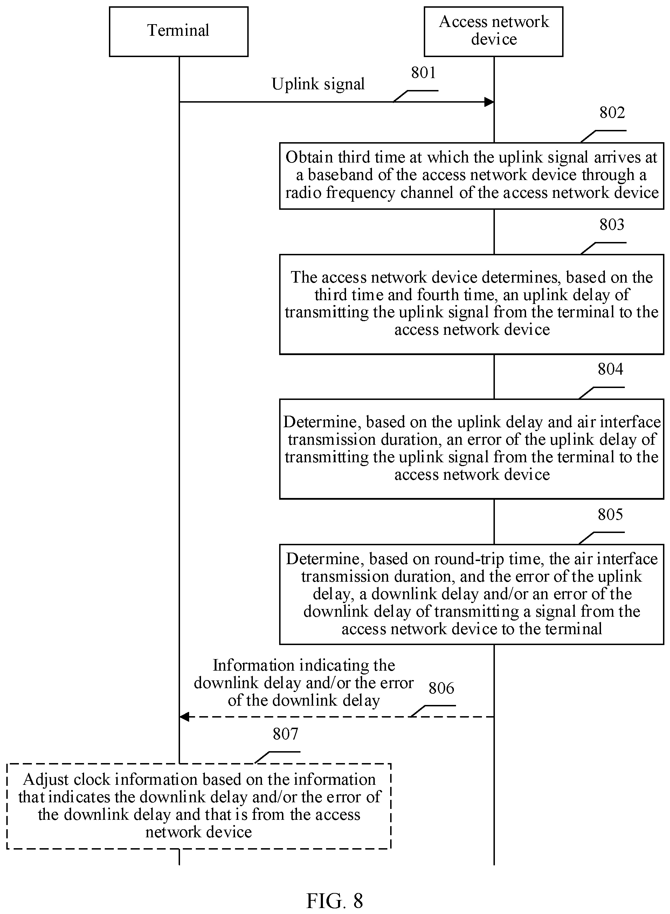

FIG. 8 is a flowchart of interaction of another communication method according to an embodiment of this application. In a method procedure in FIG. 8, an operation of measuring a downlink delay or an error of the downlink delay is added based on the method in FIG. 7. As shown in FIG. 8, the method includes the following steps.

801: A terminal sends an uplink signal to an access network device.

Correspondingly, the access network device receives the uplink signal from the terminal. For step 801, refer to step 701.

802: The access network device obtains third time at which the uplink signal arrives at a baseband of the access network device through a radio frequency channel of the access network device.

The third time is a moment after a moment at which an antenna of the access network device receives the uplink signal, for example, a moment at which the baseband unit of the access network device receives the downlink signal. For step 802, refer to step 702.

803: The access network device determines, based on the third time and fourth time, an uplink delay of transmitting the uplink signal from the terminal to the access network device.

For step 803, refer to step 703.

804: The access network device determines, based on the uplink delay and air interface transmission duration, an error of the uplink delay of transmitting the uplink signal from the terminal to the access network device.

The air interface transmission duration is duration of transmitting, to an antenna of the terminal through an air interface, a signal sent by the antenna of the access network device. A formula for determining, by the access network device based on the uplink delay and the air interface transmission duration, the error of the uplink delay of transmitting the uplink signal from the terminal to the access network device may be as follows:

$$t\_error\_UL = t\_trans - t\_real \qquad (3)$$

t_error_UL represents the error of the uplink delay, t_trans represents the uplink delay, and t_real represents the air interface transmission duration.

805: The access network device determines, based on round-trip time, the air interface transmission duration, and the error of the uplink delay, the downlink delay and/or the error of the downlink delay of transmitting a signal from the access network device to the terminal.

A formula for determining, by the access network device based on the round-trip time, the air interface transmission duration, and the error of the uplink delay the error of the downlink delay of transmitting the signal from the access network device to the terminal may be as follows:

$$t\_error\_DL = |2T - 2t\_real| - t\_error\_UL \quad (4)$$

t_error_DL represents the error of the downlink delay, 2T represents the round-trip time, t_real represents the air interface transmission duration, and t_error_UL represents the error of the uplink delay. The RTT includes round-trip time of the downlink signal and the uplink signal. Therefore, 2T includes the error of the downlink delay and the error of the uplink delay. After t_error_UL is calculated, the access network device may calculate the error of the downlink delay by using the formula (4).

A formula for determining, by the access network device based on the round-trip time, the air interface transmission duration, and the error of the uplink delay, the downlink delay of transmitting the signal from the access network device to the terminal may be as follows:

$$t\_error\_DL = 2T - t\_real - t\_error\_UL \qquad (5)$$

t_error_DL represents the error of the downlink delay, 2T represents the round-trip time, t_real represents the air interface transmission duration, and t_error_UL represents the error of the uplink delay.

806: The access network device sends, to the terminal, information indicating the downlink delay and/or the error of the downlink delay.

The access network device may send, to the terminal before or after a time service, or in a time service message, the information indicating the downlink delay and/or the error of the downlink delay. After receiving clock information for a time service and the error the downlink delay (or the downlink delay), the terminal may compensate and adjust the clock information for a time service.

807: The terminal adjusts the clock information based on the information that indicates the downlink delay and/or the error of the downlink delay and that is from the access network device.

Step 806 and step 807 may be replaced with the following: The access network device adjusts, based on the downlink delay and/or the error of the downlink delay, clock information delivered to the terminal; and the access network device sends adjusted clock information to the terminal.

In this embodiment of this application, the access network device determines, based on the round-trip time, the air interface transmission duration, and the error of the uplink delay, the downlink delay and/or the error of the downlink delay of transmitting the signal from the access network device to the terminal. In this way, the downlink delay and/or the error of the downlink delay of transmitting the signal from the access network device to the terminal can be accurately determined, and a workload of the terminal is reduced.

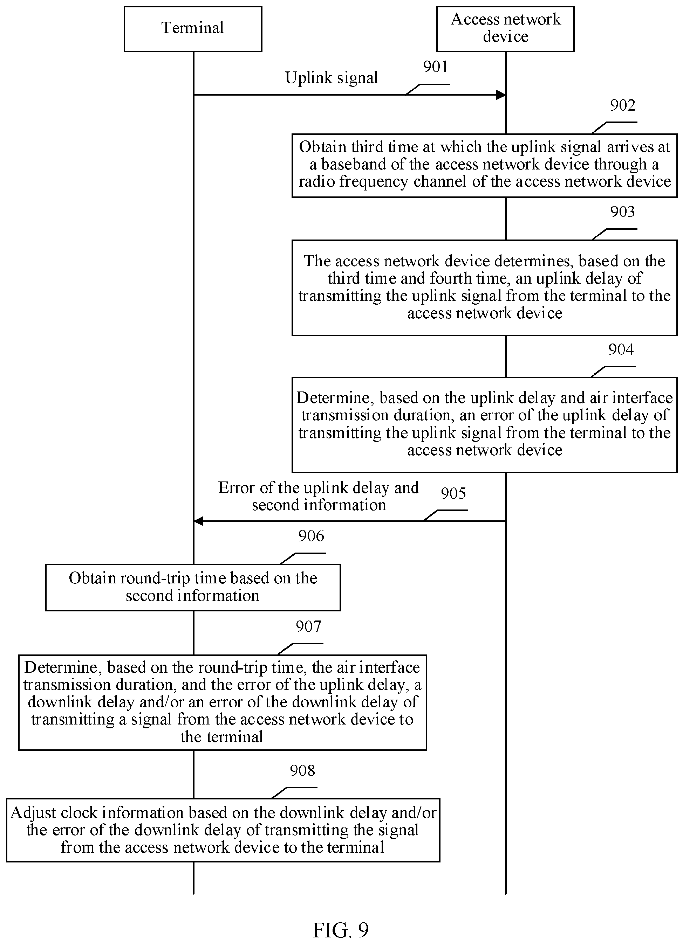

FIG. 9 is a flowchart of interaction of another communication method according to an embodiment of this application. In a method procedure in FIG. 9, an operation of measuring a downlink delay or an error of the downlink delay is added based on the method in FIG. 7. As shown in FIG. 9, the method includes the following steps.

901: A terminal sends an uplink signal to an access network device.

Correspondingly, the access network device receives the uplink signal from the terminal. For step 901, refer to step 701.

902: The access network device obtains third time at which the uplink signal arrives at a baseband of the access network device through a radio frequency channel of the access network device.

The third time is a moment after a moment at which an antenna of the access network device receives the uplink signal, for example, a moment at which the baseband unit of the access network device receives the downlink signal. For step 902, refer to step 702.

903: The access network device determines, based on the third time and fourth time, an uplink delay of transmitting the uplink signal from the terminal to the access network device.

For step 903, refer to step 703.

904: The access network device determines, based on the uplink delay and air interface transmission duration, an error of the uplink delay of transmitting the uplink signal from the terminal to the access network device.

For step 904, refer to step 804.

905: The access network device sends the error of the uplink delay and second information to the terminal.

The second information is used by the terminal to determine round-trip time between the access network device and the terminal. For example, the second information is (t4-t1) in an RTT measurement procedure.

906: The terminal obtains the round-trip time based on the second information.

Step 906 is optional. The terminal may alternatively obtain the round-trip time in another manner. This is not limited herein.

907: The terminal determines, based on the round-trip time, the air interface transmission duration, and the error of the uplink delay, the downlink delay and/or the error of the downlink delay of transmitting a signal from the access network device to the terminal.

For step 907, refer to step 805.

908: The terminal adjusts clock information based on the downlink delay and/or the error of the downlink delay of transmitting the signal from the access network device to the terminal.

In this embodiment of this application, the downlink delay and/or the error of the downlink delay of transmitting the signal from the access network device to the terminal are/is determined based on the error of the uplink delay, the air interface transmission duration, and the round-trip time. The terminal may compensate and adjust the clock information.

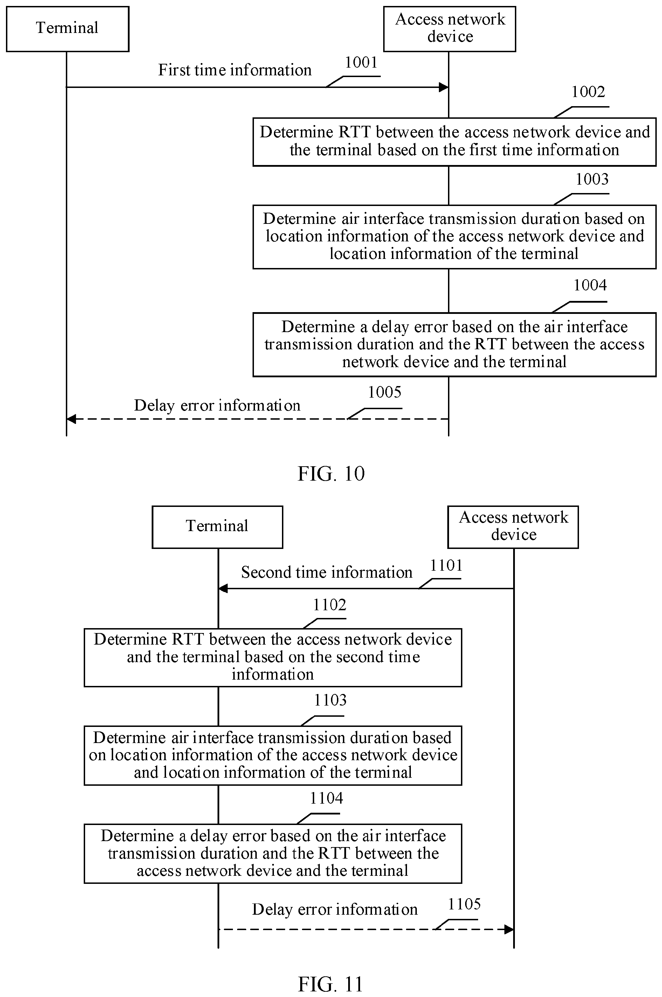

FIG. 10 is a flowchart of interaction of another communication method according to an embodiment of this application. As shown in FIG. 10, the method includes the following steps.

1001: A terminal sends first time information to an access network device.

The first time information indicates (t3-t2) in FIG. 3. The terminal and the access network device may perform the method procedure in FIG. 3. The terminal may obtain t2 and t3, and the access network device may obtain t1 and t4.

1002: The access network device determines RTT between the access network device and the terminal based on the first time information.

For example, the access network device calculates the RTT between the access network device and the terminal by using the foregoing formula (1). The access network device may obtain the RTT between the access network device and the terminal in another manner. This is not limited in this embodiment of this application. For example, the access network device sends second time information to the terminal, where the second time information indicates (t4-t1) in FIG. 3. The terminal determines the RTT between the access network device and the terminal based on the second time information. The terminal sends third time information to the access network device. The access network device obtains the RTT between the access network device and the terminal based on the third time information.

1003: The access network device determines air interface transmission duration based on location information of the access network device and location information of the terminal.

1004: The access network device determines a delay error based on the air interface transmission duration and the RTT between the access network device and the terminal.

The delay error is an error of a downlink delay, and is also an error of an uplink delay. It should be understood that an uplink transmission process and a downlink transmission process are opposite processes in which a same transmission channel is used. Therefore, the error of the uplink delay is the same as the error of the downlink delay.

For example, a formula for determining the delay error by the access network device based on the air interface transmission duration and the RTT between the access network device and the terminal is as follows:

$$t\_error=T-t\_real \quad (6)$$

t_ error represents the delay error, T represents half of the round-trip time, and t_real represents the air interface transmission duration. t_error is half of (2T-2t_real). 2T represents the round-trip time, and 2t_real represents twice the air interface transmission duration. (2T-2t_real) represents a sum of the error of the uplink delay and the error of the downlink delay. Because the error of the uplink delay is the same as the error of the downlink delay, both the error of the uplink delay and the error of the downlink delay are (T-t_real).

1005: The access network device sends delay error information to the terminal.

The delay error information indicates the delay error. Step 1005 is optional. Step 1005 may be replaced with the following: The access network device adjusts, based on a time domain error, clock information delivered by the access network device to the terminal.

In this embodiment of this application, the access network device determines the delay error based on the air interface transmission duration and the RTT between the access network device and the terminal. In this way, the delay error can be determined more accurately.

FIG. 11 is a flowchart of interaction of another communication method according to an embodiment of this application. As shown in FIG. 11, the method includes the following steps.

1101: An access network device sends second time information to a terminal.

The second time information indicates (t4-t1) in FIG. 3. The terminal and the access network device may perform the method procedure in FIG. 3. The terminal may obtain t2 and t3, and the access network device may obtain t1 and t4.

1102: The terminal determines RTT between the access network device and the terminal based on the second time information.

For example, the terminal calculates the RTT between the access network device and the terminal by using the foregoing formula (1). The terminal may obtain the RTT between the access network device and the terminal in another manner. This is not limited in this embodiment of this application. For example, the terminal sends first time information to the access network device, where the first time information indicates (t3-t2) in FIG. 3. The access network device determines the RTT between the access network device and the terminal based on the first time information. The access network device sends third time information to the terminal. The terminal obtains the RTT between the access network device and the terminal based on the third time information.

1103: The terminal determines air interface transmission duration based on location information of the access network device and location information of the terminal.

1104: The terminal determines a delay error based on the air interface transmission duration and the RTT between the access network device and the terminal.

The delay error is an error of a downlink delay, and is also an error of an uplink delay. It should be understood that an uplink transmission process and a downlink transmission process are opposite processes in which a same transmission channel is used. Therefore, the error of the uplink delay is the same as the error of the downlink delay. For example, the terminal determines the delay error based on the air interface transmission duration and the RTT between the access network device and the terminal by using the foregoing formula (6). For step 1104, refer to step 1004.

1105: The terminal sends delay error information to the access network device.

The delay error information indicates the delay error. Step 1105 is optional. Step 1105 may be replaced with the following: The terminal adjusts clock information from the access network device based on a time domain error.

In this embodiment of this application, the terminal determines the delay error based on the air interface transmission duration and the RTT between the access network device and the terminal. In this way, the delay error can be determined more accurately.

It may be understood that, to implement functions in the foregoing embodiments, the access network device (for example, a base station) and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is executed through hardware or hardware driven by computer software depends on particular application scenarios and design constraint conditions of the technical solutions.

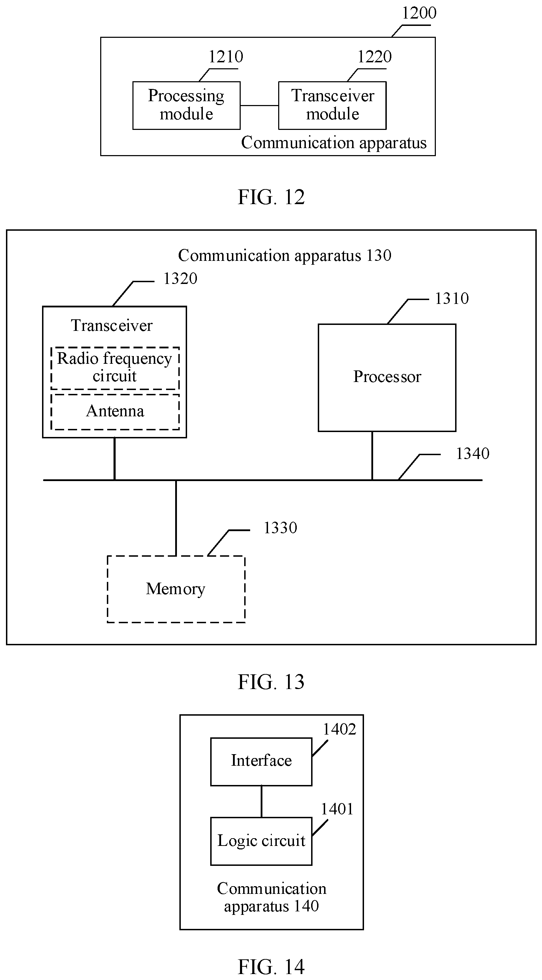

FIG. 12 to FIG. 14 are diagrams of structures of possible communication apparatuses according to embodiments of this application. These communication apparatuses may be configured to implement functions of the terminal device or the access network device in the foregoing method embodiments. Therefore, beneficial effects of the foregoing method embodiments can also be achieved. In embodiments of this application, the communication apparatus may be one of the terminals 120a to 120j shown in FIG. 1, may be the base station 110a or 110b shown in FIG. 1, or may be a module (for example, a chip) used in the terminal or an access network device.

FIG. 12 is a diagram of a structure of a communication apparatus 1200 according to an embodiment of this application. The communication apparatus 1200 may correspondingly implement functions or steps implemented by the terminal in the foregoing method embodiments, or may correspondingly implement functions or steps implemented by the access network device in the foregoing method embodiments. The communication apparatus may include a processing module 1210 and a transceiver module 1220. In a possible implementation, the apparatus may further include a storage unit. The storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing units may be independently disposed, or may be partially or completely integrated. For example, the transceiver module 1220 may include a sending module and a receiving module. The sending module may be a transmitter, and the receiving module may be a receiver. An entity corresponding to the transceiver module 1220 may be a transceiver, or may be a communication interface.

In some possible implementations, the communication apparatus 1200 can correspondingly implement the behavior and the functions of the terminal in the foregoing method embodiments. For example, the communication apparatus 1200 may be a terminal, or may be a component (for example, a chip or a circuit) used in the terminal. The transceiver module 1220 may be configured to perform, for example, all receiving or sending operations performed by the terminal in the embodiments shown in FIG. 5, FIG. 6, FIG. 7, FIG. 8, FIG. 9, FIG. 10, and FIG. 11, for example, step 501 in the embodiment shown in FIG. 5, step 601 and step 603 in the embodiment shown in FIG. 6, step 701 in the embodiment shown in FIG. 7, step 801 and step 806 in the embodiment shown in FIG. 8, step 901 and step 905 in the embodiment shown in FIG. 9, and/or another process used for supporting the technology described in this specification. The processing module 1210 is configured to perform all operations, other than transceiver operations, performed by the terminal in the embodiments in FIG. 5, FIG. 6, FIG. 7, FIG. 8, FIG. 9, FIG. 10, and FIG. 11, for example, step 502 and step 503 in the embodiment shown in FIG. 5, step 602, step 604, step 605, and step 606 in the embodiment shown in FIG. 6, step 807 in the embodiment shown in FIG. 8, and step 906, step 907, and step 908 in the embodiment shown in FIG. 9.

In some possible implementations, the communication apparatus 1200 can correspondingly implement the behavior and the functions of the access network device in the foregoing method embodiments. For example, the communication apparatus 1200 may be an access network device, or may be a component (for example, a chip or a circuit) used in the access network device. The transceiver module 1220 may be configured to perform, for example, all receiving or sending operations performed by the access network device in the embodiments shown in FIG. 5, FIG. 6, FIG. 7, FIG. 8, FIG. 9, FIG. 10, and FIG. 11, for example, step 501 in the embodiment shown in FIG. 5, step 601 and step 603 in the embodiment shown in FIG. 6, step 701 in the embodiment shown in FIG. 7, step 801 and step 806 in the embodiment shown in FIG. 8, step 901 and step 905 in the embodiment shown in FIG. 9, and/or another process used for supporting the technology described in this specification. The processing module 1210 is configured to perform all operations, other than transceiver operations, performed by the access network device, for example, step 702 and step 703 in the embodiment shown in FIG. 7, step 802, step 803, step 804, and step 805 in the embodiment shown in FIG. 8, and step 902, step 903, and step 904 in the embodiment shown in FIG. 9.

FIG. 13 is a diagram of a structure of another communication apparatus 130 according to an embodiment of this application. The communication apparatus in FIG. 13 may be the foregoing terminal, or may be the foregoing access network device.

As shown in FIG. 13, the communication apparatus 130 includes at least one processor 1310 and a transceiver 1320.

In some embodiments of this application, the processor 1310 and the transceiver 1320 may be configured to perform functions, operations, or the like performed by the terminal. The transceiver 1320 performs, for example, all receiving or sending operations performed by the terminal in the embodiments in FIG. 5, FIG. 6, FIG. 7, FIG. 8, FIG. 9, FIG. 10, and FIG. 11. The processor 1310 is, for example, configured to perform all operations, other than transceiver operations, performed by the terminal in the embodiments in FIG. 5, FIG. 6, FIG. 7, FIG. 8, FIG. 9, FIG. 10, and FIG. 11.

In some embodiments of this application, the processor 1310 and the transceiver 1320 may be configured to perform functions, operations, or the like performed by the access network device. The transceiver 1320 performs, for example, all receiving or sending operations performed by the access network device in the embodiments in FIG. 5, FIG. 6, FIG. 7, FIG. 8, FIG. 9, FIG. 10, and FIG. 11. The processor 1310 is configured to perform all operations, other than transceiver operations, performed by the access network device.

The transceiver 1320 is configured to communicate with another device/apparatus via a transmission medium. The processor 1310 receives/sends data and/or signaling via the transceiver 1320, and is configured to implement the methods in the foregoing method embodiments. The processor 1310 may implement functions of the processing module 1210, and the transceiver 1320 may implement functions of the transceiver module 1220.

Optionally, the transceiver 1320 may include a radio frequency circuit and an antenna. The radio frequency circuit is mainly configured to convert a baseband signal and a radio frequency signal, and process a radio frequency signal. The antenna is mainly configured to receive and send a radio frequency signal in a form of an electromagnetic wave. An input/output apparatus, such as a touchscreen, a display, or a keyboard, is mainly configured to receive data input by a user and output data to the user.

Optionally, the communication apparatus 130 may further include at least one memory 1330, configured to store program instructions and/or data. The memory 1330 is coupled to the processor 1310. The coupling in this embodiment of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1330. The processor 1310 may execute the program instructions stored in the memory 1330. At least one of the at least one memory may be included in the processor.

The processor 1310 may read a software program in the memory 1330, interpret and execute instructions of the software program, and process data of the software program. When data needs to be sent in a wireless manner, the processor 1310 performs baseband processing on to-be-sent data, and then outputs a baseband signal to the radio frequency circuit; and the radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1310; and the processor 1310 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 1320, the processor 1310, and the memory 1330 is not limited in embodiments of this application. In this embodiment of this application, the memory 1330, the processor 1310, and the transceiver 1320 are connected through a bus 1340 in FIG. 13. The bus is represented by using a bold line in FIG. 13. A connection manner between other components is merely an example for description, and is not limited thereto. The bus may be classified into an address bus, a data bus, a control bus, and the like. For ease of representation, only one bold line represents the bus in FIG. 13, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 14 is a diagram of a structure of another communication apparatus 140 according to an embodiment of this application. As shown in FIG. 14, the communication apparatus shown in FIG. 14 includes a logic circuit 1401 and an interface 1402. The processing module 1210 in FIG. 12 may be implemented by using the logic circuit 1401, and the transceiver module 1220 in FIG. 12 may be implemented by using the interface 1402. The logic circuit 1401 may be a chip, a processing circuit, an integrated circuit, a system-on-chip (system-on-chip, SoC), or the like, and the interface 1402 may be a communication interface, an input/output interface, or the like. In this embodiment of this application, the logic circuit and the interface may be coupled to each other. A specific manner of connection between the logic circuit and the interface is not limited in embodiments of this application.

In some embodiments of this application, the logic circuit and the interface may be configured to perform functions, operations, or the like performed by the foregoing terminal.

In some embodiments of this application, the logic circuit and the interface may be configured to perform the functions, the operations, or the like performed by the foregoing access network device.

This application further provides a computer-readable storage medium. The computer-readable storage medium stores a computer program or instructions. When the computer program or the instructions are run on a computer, the computer is enabled to perform the method in the foregoing embodiment.

This application further provides a computer program product. The computer program product includes instructions or a computer program. When the instructions or the computer program runs on a computer, the method in the foregoing embodiments is performed.

This application further provides a communication system, including the foregoing terminal and the foregoing access network device.

This application further provides a chip. The chip includes communication receiving and a processor. The communication interface is configured to receive and send a signal of the chip. The processor is configured to execute computer program instructions, so that a communication apparatus including the chip performs the method in the foregoing embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile storage medium or a non-volatile storage medium, or may include both a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

**Claims**

1. A communication method, performed by a terminal or a module used in the terminal, and comprising:

   obtaining first time at which a downlink signal arrives at a baseband through a radio frequency channel of the terminal;
   determining, based on the first time and second time, a downlink delay of transmitting the downlink signal from an access network device to the terminal, wherein the second time is time at which a baseband of the access network device sends the downlink signal;
   determining an error of the downlink delay based on the downlink delay and air interface transmission duration, wherein the air interface transmission duration is duration of transmitting, to an antenna of the terminal through an air interface, a signal sent by an antenna of the access network device; and
   sending downlink delay error information to the access network device, wherein the downlink delay error information indicates the error of the downlink delay.

2. The method according to claim 1, wherein before determining the error of the downlink delay based on the downlink delay and air interface transmission duration, the method further comprises:
   determining the air interface transmission duration based on location information of the access network device and location information of the terminal.

3. The method according to claim 1 or 2, wherein the method further comprises:
   receiving measurement information from the access network device, wherein the measurement information comprises a request for measuring the error of the downlink delay.

4. The method according to any one of claims 1 to 3, wherein the measurement information further comprises the second time, and the method further comprises:
   obtaining the second time based on the measurement information.

5. The method according to claim 4, wherein the measurement information further comprises at least one of the following: configuration information of the downlink signal and the location information of the access network device.

6. The method according to any one of claims 1 to 5, wherein the method further comprises:
   sending capability information to the access network device, wherein the capability information indicates that the terminal has at least one of the following capabilities: a downlink delay measurement capability, a downlink delay error measurement capability, and a clock information calibration capability.

7. A communication method, performed by an access network device or a module used in the access network device, and comprising:

   sending measurement information to a terminal, wherein the measurement information comprises a request for measuring an error of a downlink delay and second time, the second time is time at which a baseband of the access network device sends a downlink signal, and the downlink signal is used for measuring the error of the downlink delay;
   sending, by the baseband of the access network device, the downlink signal at the second time; and
   receiving downlink delay error information from the terminal, wherein the downlink delay error information indicates the error of the downlink delay of sending a signal by the access network device to the terminal.

8. The method according to claim 7, wherein the method further comprises:
   determining the downlink delay based on the error of the downlink delay and air interface transmission duration, wherein the air interface transmission duration is duration of transmitting, to an antenna of the terminal through an air interface, a signal sent by an antenna of the access network device.

9. The method according to claim 7 or 8, wherein the measurement information further comprises at least one of the following: configuration information of the downlink signal and location information of the access network device.

10. The method according to any one of claims 7 to 9, wherein the method further comprises:
receiving capability information from the terminal, wherein the capability information indicates that the terminal has at least one of the following capabilities: a downlink delay measurement capability, a downlink delay error measurement capability, and a clock information calibration capability.

11. A communication method, performed by an access network device or a module used in the access network device, and comprising:

obtaining third time at which an uplink signal arrives at a baseband of the access network device through a radio frequency channel of the access network device;
determining, based on the third time and fourth time, an uplink delay of transmitting the uplink signal from a terminal to the access network device, wherein the fourth time is time at which a baseband of the terminal sends the uplink signal; and
determining, based on the uplink delay and air interface transmission duration, an error of the uplink delay of transmitting the uplink signal from the terminal to the access network device, wherein the air interface transmission duration is duration of transmitting, to an antenna of the terminal through an air interface, a signal sent by an antenna of the access network device.

12. The method according to claim 11, wherein the method further comprises:
sending the error of the uplink delay and second information to the terminal, wherein the second information is used by the terminal to determine round-trip time between the access network device and the terminal.

13. The method according to claim 11, wherein the method further comprises:

determining, based on the error of the uplink delay, the air interface transmission duration, and the round-trip time between the access network device and the terminal, a downlink delay and/or an error of the downlink delay of transmitting a signal from the access network device to the terminal; and
sending, to the terminal, information indicating the downlink delay and/or the error of the downlink delay.

14. The method according to any one of claims 11 to 13, wherein the method further comprises:
sending first information to the terminal, wherein the first information indicates the terminal to send the uplink signal to the access network device at the fourth time.

15. A communication method, performed by a terminal or a module used in the terminal, and comprising:

receiving first information sent by an access network device, wherein the first information indicates a baseband of the terminal to send an uplink signal to the access network device at fourth time; and
sending the uplink signal to the access network device at the fourth time via the baseband of the terminal.

16. The method according to claim 15, wherein the method further comprises:

receiving, from the access network device, information indicating a downlink delay and/or an error of the downlink delay; and
adjusting, based on the information indicating the downlink delay and/or the error of the downlink delay, clock information received by the terminal from the access network device.

17. The method according to claim 15, wherein the method further comprises:

receiving an error of an uplink delay and second information from the access network device, wherein the second information is used by the terminal to determine round-trip time between the access network device and the terminal;
determining, based on the second information, that the terminal determines the round-trip time between the access network device and the terminal; and
determining, based on the error of the uplink delay, air interface transmission duration, and the round-trip time, the downlink delay and/or the error of the downlink delay of transmitting a signal from the access network device to the terminal.

18. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 17 by using a logic circuit or by executing code instructions.

**19.** A computer-readable storage medium, wherein the storage medium stores a computer program or instructions, and when the computer program or the instructions are executed by a communication apparatus, the method according to any one of claims 1 to 17 is implemented.

**20.** A computer program product, wherein the computer program product comprises a computer program, the computer program comprises program instructions, and when the program instructions are executed, a computer is enabled to perform the method according to any one of claims 1 to 17.

**21.** A communication system, wherein the communication system comprises a communication apparatus configured to perform the method according to any one of claims 1 to 6, and a communication apparatus configured to perform the method according to any one of claims 7 to 10; or the communication system comprises a communication apparatus configured to perform the method according to any one of claims 11 to 14, and a communication apparatus configured to perform the method according to any one of claims 15 to 17.

FIG. 1

EP 4 633 255 A1

FIG. 2

FIG. 3

FIG. 4

```
┌─────────────────────┐                    ┌─────────────────────┐
│      Terminal       │                    │   Access network    │
│                     │                    │       device        │
└──────────┬──────────┘                    └──────────┬──────────┘
           │                      501                  │
           │◄───────────Downlink signal────────────────┤
           │                      502                  │
┌──────────┴────────────────────────────────────────┐ │
│ Obtain first time at which the downlink signal     │ │
│ arrives at a baseband through a radio frequency    │ │
│ channel of the terminal                            │ │
└──────────┬─────────────────────────────────────────┘ │
           │                      503                  │
┌──────────┴────────────────────────────────────────┐ │
│ The terminal determines, based on the first time   │ │
│ and second time, a downlink delay of transmitting  │ │
│ the downlink signal from the access network        │ │
│ device to the terminal                             │ │
└──────────┬─────────────────────────────────────────┘ │
           │                                           │
```

FIG. 5

```
┌─────────────────────┐                    ┌─────────────────────┐
│      Terminal       │                    │   Access network    │
│                     │                    │       device        │
└──────────┬──────────┘                    └──────────┬──────────┘
           │                      601                  │
           │◄────────Measurement information───────────┤
           │                      602                  │
┌──────────┴──────────────────────────────┐           │
│ The terminal obtains second time based   │           │
│ on the measurement information           │           │
└──────────┬───────────────────────────────┘           │
           │                      603                  │
           │◄────────────Downlink signal───────────────┤
           │                      604                  │
┌──────────┴──────────────────────────────┐           │
│ Obtain first time at which the downlink  │           │
│ signal arrives at a baseband through a   │           │
│ radio frequency channel of the terminal  │           │
└──────────┬───────────────────────────────┘           │
           │                      605                  │
┌──────────┴──────────────────────────────┐           │
│ The terminal determines, based on the    │           │
│ first time and the second time, a        │           │
│ downlink delay of transmitting the       │           │
│ downlink signal from the access network  │           │
│ device to the terminal                   │           │
└──────────┬───────────────────────────────┘           │
           │                      606                  │
┌ ─ ─ ─ ─ ─┴─ ─ ─ ─ ─ ─ ─ ─ ─ ─ ─ ─ ─ ─ ─ ┐          │
│ Determine an error of the downlink delay  │          │
│ based on the downlink delay and air       │          │
│ interface transmission duration           │          │
└ ─ ─ ─ ─ ─┬─ ─ ─ ─ ─ ─ ─ ─ ─ ─ ─ ─ ─ ─ ─ ─ ┘          │
           │    Downlink delay error           607    │
           ├ ─ ─ ─ ─ ─information─ ─ ─ ─ ─ ─ ─ ─ ─ ─ ►│
           │                                           │
```

FIG. 6

...

| Terminal | | Access network device |
|---|---|---|

Uplink signal  701

702

Obtain third time at which the uplink signal arrives at a baseband of the access network device through a radio frequency channel of the access network device

703

The access network device determines, based on the third time and fourth time, an uplink delay of transmitting the uplink signal from the terminal to the access network device

FIG. 7

```
┌─────────────────┐                      ┌─────────────────┐
│    Terminal     │                      │  Access network │
│                 │                      │     device      │
└────────┬────────┘                      └────────┬────────┘
         │                                        │
         │          Uplink signal     801         │
         │───────────────────────────/───────────▶│
         │                                        │          802
                                        ┌─────────┴───────────────/──────────┐
                                        │ Obtain third time at which the uplink signal arrives at │
                                        │ a baseband of the access network device through a │
                                        │ radio frequency channel of the access network device │
                                        └─────────┬───────────────────────────┘
                                                  │          803
                                        ┌─────────┴───────────────/──────────┐
                                        │ The access network device determines, based on the │
                                        │ third time and fourth time, an uplink delay of │
                                        │ transmitting the uplink signal from the terminal to the │
                                        │ access network device │
                                        └─────────┬───────────────────────────┘
                                                  │          804
                                        ┌─────────┴───────────────/──────────┐
                                        │ Determine, based on the uplink delay and air interface │
                                        │ transmission duration, an error of the uplink delay of │
                                        │ transmitting the uplink signal from the terminal to the │
                                        │ access network device │
                                        └─────────┬───────────────────────────┘
                                                  │          805
                                        ┌─────────┴───────────────/──────────┐
                                        │ Determine, based on round-trip time, the air interface │
                                        │ transmission duration, and the error of the uplink │
                                        │ delay, a downlink delay and/or an error of the │
                                        │ downlink delay of transmitting a signal from the │
                                        │ access network device to the terminal │
                                        └─────────┬───────────────────────────┘
```

Information indicating the
downlink delay and/or the error   806
of the downlink delay
◀ ─ ─ ─ ─ ─ ─ ─ ─ ─ ─ ─ ─ /─ ─ ─

807

┌ ─ ─ ─ ─ ─ ─ ─ ─ /─ ─ ─ ─ ─ ─ ─ ┐
│ Adjust clock information based on the information │
│ that indicates the downlink delay and/or the error of │
│ the downlink delay and that is from the access │
│ network device │
└ ─ ─ ─ ─ ─ ─ ─ ─ ─ ─ ─ ─ ─ ─ ─ ─ ┘

FIG. 8

| Terminal | | Access network device |
|---|---|---|

Uplink signal     901

902

Obtain third time at which the uplink signal arrives at a baseband of the access network device through a radio frequency channel of the access network device

903

The access network device determines, based on the third time and fourth time, an uplink delay of transmitting the uplink signal from the terminal to the access network device

904

Determine, based on the uplink delay and air interface transmission duration, an error of the uplink delay of transmitting the uplink signal from the terminal to the access network device

Error of the uplink delay and    905
second information

906

Obtain round-trip time based on the second information

907

Determine, based on the round-trip time, the air interface transmission duration, and the error of the uplink delay, a downlink delay and/or an error of the downlink delay of transmitting a signal from the access network device to the terminal

908

Adjust clock information based on the downlink delay and/or the error of the downlink delay of transmitting the signal from the access network device to the terminal

FIG. 9

Terminal

Access network device

First time information 1001

Determine RTT between the access network device and the terminal based on the first time information 1002

Determine air interface transmission duration based on location information of the access network device and location information of the terminal 1003

Determine a delay error based on the air interface transmission duration and the RTT between the access network device and the terminal 1004

Delay error information 1005

FIG. 10

Terminal

Access network device

Second time information 1101

Determine RTT between the access network device and the terminal based on the second time information 1102

Determine air interface transmission duration based on location information of the access network device and location information of the terminal 1103

Determine a delay error based on the air interface transmission duration and the RTT between the access network device and the terminal 1104

Delay error information 1105

FIG. 11

1200

Processing module 1210

Transceiver module 1220

Communication apparatus

FIG. 12

Communication apparatus 130

1320

Transceiver

Radio frequency circuit

Antenna

1310

Processor

1340

1330

Memory

FIG. 13

Interface 1402

Logic circuit 1401

Communication apparatus 140

FIG. 14

<div align="center">

**INTERNATIONAL SEARCH REPORT**

</div>

| | International application No. |
|---|---|
| | **PCT/CN2023/140967** |

| A. | CLASSIFICATION OF SUBJECT MATTER |
|---|---|

H04W56/00(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, CNKI, VEN, 3GPP, DWPI: 定时, 授时, 同步, 发送, 发射, 接收, 到达, 天线, 基带, 通道, 硬件, 上行, 下行, 时延, 延时, 基站, 接入网, 终端, 空口传输时长, 时间, 时刻, 时间提前量, 指示, timing, send, transmit, receive, arrival, antenna, baseband, access, terminal, UE, synchronization, air interface transmission, duration, time, instant, TA, time advance, indication

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114845235 A (DATANG MOBILE COMMUNICATIONS EQUIPMENT CO., LTD.) 02 August 2022 (2022-08-02) <br> description, paragraphs 2-91 | 1, 2, 11-14, 18-20 |
| Y | CN 114845235 A (DATANG MOBILE COMMUNICATIONS EQUIPMENT CO., LTD.) 02 August 2022 (2022-08-02) <br> description, paragraphs 2-91 | 16, 17, 21 |
| X | CN 108271274 A (ZTE CORP.) 10 July 2018 (2018-07-10) <br> description, paragraphs 78-104 | 15, 18-20 |
| Y | CN 108271274 A (ZTE CORP.) 10 July 2018 (2018-07-10) <br> description, paragraphs 78-104 | 16, 17, 21 |
| A | CN 101043254 A (DATANG MOBILE COMMUNICATIONS EQUIPMENT CO., LTD.) 26 September 2007 (2007-09-26) <br> entire document | 1-21 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 February 2024** | **04 March 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/140967** |

**C.    DOCUMENTS CONSIDERED TO BE RELEVANT**

| Category* | Citation of document, with indication, where appropriate, of the relevant passages | Relevant to claim No. |
|---|---|---|
| A | US 2022061009 A1 (ELECTRONICS AND TELECOMMUNICATIONS RESEARCH INSTITUTE) 24 February 2022 (2022-02-24)<br>entire document | 1-21 |
| A | CN 107070567 A (NATIONAL TIME SERVICE CENTER, CHINESE ACADEMY OF SCIENCES) 18 August 2017 (2017-08-18)<br>entire document | 1-21 |

Form PCT/ISA/210 (second sheet) (July 2022)

**INTERNATIONAL SEARCH REPORT**
Information on patent family members

International application No.

**PCT/CN2023/140967**

| Patent document cited in search report | | | Publication date (day/month/year) | Patent family member(s) | | | Publication date (day/month/year) |
|---|---|---|---|---|---|---|---|
| CN | 114845235 | A | 02 August 2022 | WO | 2022151859 | A1 | 21 July 2022 |
| CN | 108271274 | A | 10 July 2018 | WO | 2018126756 | A1 | 12 July 2018 |
| CN | 101043254 | A | 26 September 2007 | | None | | |
| US | 2022061009 | A1 | 24 February 2022 | KR | 20220025676 | A | 03 March 2022 |
| CN | 107070567 | A | 18 August 2017 | | None | | |

Form PCT/ISA/210 (patent family annex) (July 2022)

**EP 4 633 255 A1**

## REFERENCES CITED IN THE DESCRIPTION

**Patent documents cited in the description**

- CN 202211711469